# EUROPEAN PATENT SPECIFICATION

(11) **EP 3 389 360 B1**
(45) Date of publication and mention of the grant of the patent: **23.09.2020**
(21) Application number: 16838072.3
(22) Date of filing: 16.12.2016
(51) Int. Cl.: A01G 27/00

(54) **IRRIGATION SYSTEM WITH AUTOMATIC IRRIGATION LIQUID SPRAYING DEVICE**
BEWÄSSERUNGSSYSTEM MIT AUTOMATISCHER SPRÜHANLAGE
SYSTÈME D'IRRIGATION AVEC DISPOSITIF DE PULVÉRISATION DE LIQUIDE D'IRRIGATION AUTOMATIQUE

(30) Priority: 18.12.2015 IT UB20159868
(43) Date of publication of application: 24.10.2018
(73) Proprietor: Ielo, Domenico, 89132 Reggio Calabria (IT)
(72) Inventor: Ielo, Domenico, 89132 Reggio Calabria (IT)
(74) Representative: Garavelli, Paolo
(86) International application number: PCT/IT2016/000293
(87) International publication number: WO 2017/103957

(56) References cited:
- CN-A- 104 641 994
- DE-A1-102008 016 968
- JP-A- H08 140 507
- US-A1- 2002 088 177
- US-A1- 2013 185 997

## Description

The present invention refers to an irrigation system with automatic irrigation liquid spraying device. The irrigation fluid is commonly water.

The prior art as regards irrigation systems of this type is given by WO-A1-89/00809: this system has a container and an irrigating device, which prevent the operator from having to determine the irrigation times, and is the only system which does not need any timer, since the system itself is a direct sensor of thermal and hygrometric conditions and of the water - plant/flower absorption conditions. The system of WO-A1-80/00809 is an improvement with respect to irrigating systems which, in the majority of cases, provide the plant/flower container with a dropwise irrigation with an irrigation cycle set by a timer.

There are also a few irrigation systems without timer, which are mainly based on the capillary recall of water by using clay cones or by using multi-layer mats with a water reserve. Other systems use cords, which, being wetted by a water reserve, humidify the plant/flower container by capillarity. All the above systems, however, are "static" systems with a continuous water recall.

DE 10 2008 016968 A1 and US 2002/088177 A1 discloses further examples of irrigation devices.

Object of the present invention is solving the above prior-art problems, by providing an irrigation system with automatic irrigation liquid spraying device, which does without the presence of a timer, and automatically starts and stops the irrigation of liquid to the container for plants/flowers to which it is connected: this prevents the operator from having to continuously check the irrigation liquid level and provides irrigation only and when it is necessary, without any human intervention. Another object of the present invention is providing an irrigation system as mentioned above, which has a simple structure, is easy to manufacture, has a small cost and is very efficient as regards its operation.

The above and other objects and advantages of the invention, as will appear from the following description, are obtained by an irrigation system with automatic irrigation liquid spraying device as claimed in Claim 1. Preferred embodiments and non-trivial variations of the present invention are claimed in the dependent Claims.

It is intended that all enclosed claims are an integral part of the present disclosure.

The present invention will be better described by some preferred embodiments thereof, given as a non-limiting example, with reference to the enclosed drawings, in which:
- Figure 1 is a side sectional view of an irrigation system with automatic irrigation liquid spraying device of the present invention;
- Figure 2 is a side sectional view of an irrigation system with automatic irrigation liquid spraying device of the present invention; and
- Figure 3 is a side sectional view of an irrigation system according to the invention with automatic irrigation liquid spraying device of the present invention.

It will be immediately obvious that numerous variations and modifications (for example related to shape, sizes, arrangements and parts with equivalent functionality) could be made to what is described, without departing from the scope of the invention as appears from the enclosed claims.

With reference to the Figures, the irrigation system with automatic irrigation liquid spraying device of the invention susbtantially comprises:
- a container 4, particularly for plants or flowers, the container being equipped with a perforated bottom, this perforated bottom allowing the excess irrigation liquid to be discharged from the container 4 after having irrigated the plant/flower contained therein;
- a bottom support 5 on which the perforated bottom of the container 4 is placed;
- at least one floater 3 equipped with at least one magnet 2 and placed in the support 5;
- at least one electromechanical reed-type device 1 operatively connected to the support 5 and adapted to be actuated by the at least one magnet 2 through a contact action of the reed blades driven by a magnetic field of the magnet 2;
- a tank 6 containing irrigation liquid;
- at least one pump 7 immersed in the tank 6, operatively connected to the container 4 on a side and to the electromechanical reed-type device 1 on another side, the pump 7 being adapted to pump irrigation liquid from the tank 6 to the container 4 upon closing the reed blades with the magnet 2 when there is no irrigation liquid in the support 5 and the magnet 2 is in operating contact with the reed-type device 1, the pump 7 being adapted to stop pumping irrigation liquid from the tank 6 to the container 4 upon opening the reed blades when there is irrigation liquid in the support 5 so that the floater 3 with its magnet 2 moves away from its operating contact with the reed-type device 1.

Therefore, as can be seen above, the innovation given by the present invention is providing the bottom support 5 for the container 4 with the reed-type device 1 which operates as switch.

As known, the reed-type device 1 is an electro-mechanical component composed of two blades made of iron-nichel, which are mutually overlapped and separated by a few tenths of millimeter, sealed in a very small glass ampoule filled with inert gas: in its rest position, the reed-type device 1 is open and closed only when a magnetic field is present near its blades.

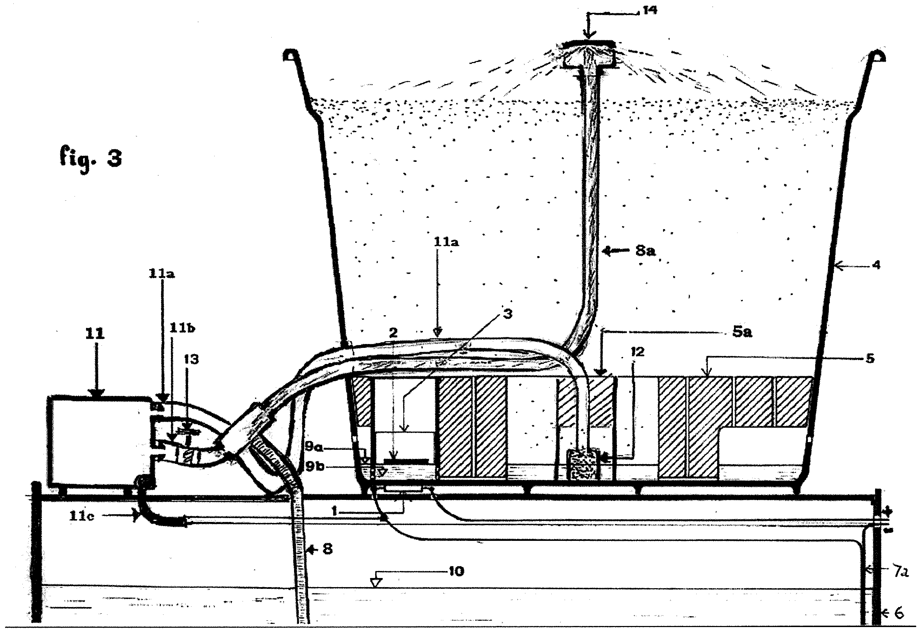

In the irrigation system of the present invention, this magnetic field is provided by the magnet 2 housed at the base of the floater 3, this latter one being constrained within its own guide: when the floater 3 descends from level 9a to the bottom level 9b of the support 5, it generates the contacts of the blades which, under the influence of the magnetic field, operate as opposite poles which attract themselves and close the circuit which allows actuating the immersion pump 7 to deliver irrigation fluid to the container 4 (through a shover element shown in the figures in different arrangements (for example 14 in Figure 3)).

The delivery of irrigation fluid ceases when the excess of irrigation water, by being collected on the bottom of the support 5, reaches level 9a, which, due to the floating thrust, will also be reached by the floater 3 and the magnet 2 connected therefo, which, not providing any more the magnetic field for polarizing the blades of the reed-type device 1, will go back to its open position, with the consequent interruption of the operation of the pump 7.

The level 9b of the bottom of the support 5 and the level 9a of the contact detachment can be regulated both depending on the intensity of the magnetic field of the magnet 2 fastened onto the base of the floater 3, and on the amount of draining water which has to be set. In practice, after experiments made by the Applicant, there is an oscillation of a few millimeters for plants needing a substrate with full water field capability, to an oscillation of 1 cm for plants which prefer a certain degree of "dryness".

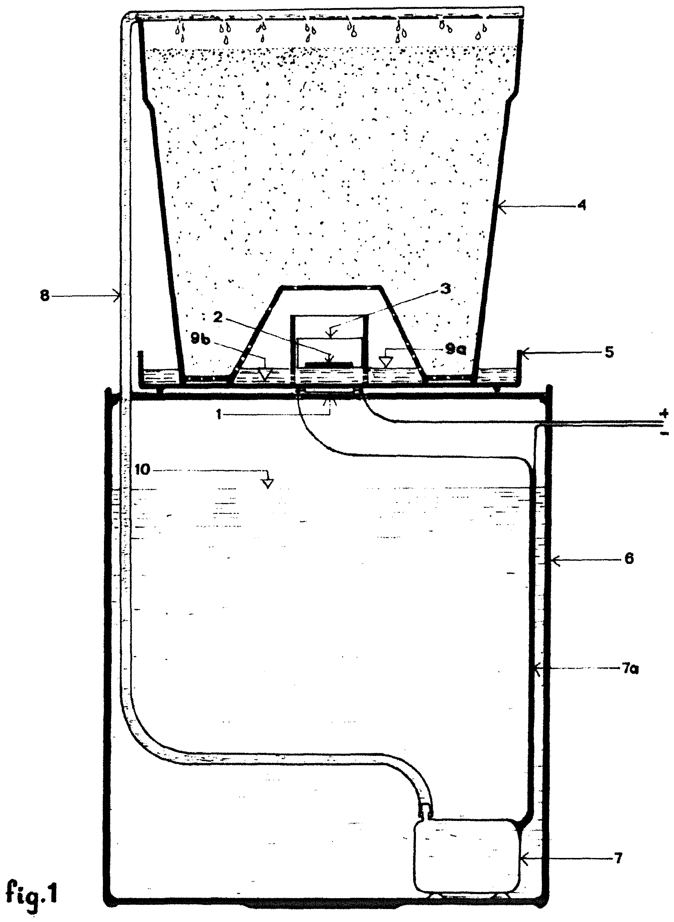

Figure 1 shows the structural features of the draining air chamber of the container 4, in order to avoid the presence of a radical lack of air deriving from an uninterrupted capillary rise as occurs with plane contact surfaces: the crown of draining water, in this model with a water supporting plate 5, is external to the container 4 and is adapted for indoor applications.

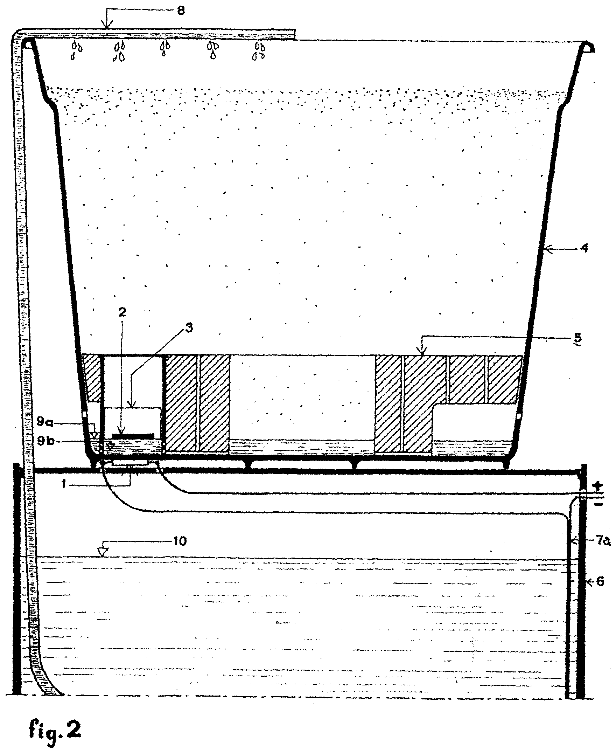

Figure 2 shows an outdoor model, and adopts a draining bottom support 5 made of foamed polystyrene: in this case, the crown of draining water is inside, while the contact area of the plant radical apparatus is limited to the central part of the container 4. Such solution is suitable for outdoor use, since it avoids too quick an evaporation of the crown of draining water due to insulation.

In Figures 1 and 2, reference number 7a designates an electric wire for the pump 7; 8 designates a small pipe for passing liquid; and 10 designates the irrigation liquid level.

Figure 3 shows the inventive model in which the concept of draining air chamber is better developed, and in which a spray irrigation with forced air is adopted, which allows a better irrigation uniformity with respect to the drop-type irrigation adopted in the systems of Figures 1 and 2.

In this case, a small air pump 11 is used, which serves both to enter air from the bottom trap 5a of the support 5 and to force water into a water passing tube 8a coming from the immersion pump 7, while the opening-closing mechanism with magnet 2 and reed blades remains unchanged.

With closed circuit, water coming from the immersion pump 7 is dragged by air coming from the air pump 11, in a laminar mode, and the acquisition of some kinetic energy allows creating a spray-type delivering device 14 when water, upon exiting, strikes a surface, preferably a plane surface, on which it flows, the delivering device 14 being activated by entering air in the duct of liquid coming from the immersion pump 7.

In Figure 3, reference number 11c designates an electric wire for actuating the air pump 11.

The advantages provided by such solution are:
- maximum and optimum oxygenation of the delivered irrigation liquid;
- modulation of the delivery through a tap 13 for regulating the air flow-rate and the delivered liquid;
- chance of delivering water at a greater height than the flow-rate heigth of the used immersion pump. In practice, with the adoption of a 2-3 Watt air pump, it is possible to deliver the water flow at a height over 100 cm with respect to a 3-5 Watt immersion pump with a flow-rate height not greater than 45 cm.

The air pump 11 has two ways, 11a, 11b, since an outlet way 11a will perform the above described object, while the other way 11b will be used to enter air in the bottom trap 5a having a porous stone 12: in this way, the radical plant system will use an air cushion upon its maximum watering due to the current irrigation. In the Applicant's experiments, the adopted solution has proven useful for plants which remain for a long time in the container 4 with the same substrate, which is unavoidably subjected to a certain compactment due to the modification of its solid - liquid - air balance.

## Claims

1. Irrigation system with automatic irrigation liquid spraying device, comprising:
- a container (4), particularly for plants or flowers, the container being equipped with a perforated bottom;
- a bottom support (5) on which the perforated bottom of the container (4) is placed;
- at least one floater (3) equipped with at least one magnet (2) and placed in the support (5) ;
- at least one electromechanical reed-type device (1) operatively connected to the support (5) and adapted to be actuated by the at least one magnet (2) through a contact action of the reed blades driven by a magnetic field of the magnet (2);
- a tank (6) containing irrigation liquid;
- at least one pump (7) immersed in the tank (6), operatively connected to the container (4) on a side and to the electromechanical reed-type device (1) on another side, the pump (7) being adapted to pump irrigation liquid from the tank (6) to the container (4) upon closing the reed blades with the magnet (2) when there is no irrigation liquid in the support (5) and the magnet (2) is in operating contact with the reed-type device (1), the pump (7) being adapted to stop pumping irrigation liquid from the tank (6) to the container (4) upon opening the reed blades when there is irrigation liquid in the support (5) so that the floater (3) with its magnet (2) moves away from its operating contact with the reed-type device (1); and
- at least one small air pump (11), which serves both to enter air from a bottom trap (5a) of the support (5) and to force water coming from the immersion pump (7) into a water passing tube (8a), with a closed circuit, water coming from the immersion pump (7) being thereby dragged by air coming from the air pump (11), and the acquisition of some kinetic energy allows creating a spray-type delivering device (14) when water, upon exiting, strikes a surface on which it flows, the delivering device (14) being activated by entering air in the duct of liquid coming from the immersion pump (7).

2. Irrigation system according to claim 1, **characterized in that** the air pump (11) has two ways (11a, 11b), an outlet way (11a) and another way (11b) to enter air in the bottom trap (5a) having a porous stone (12), the radical plant system thereby using an air cushion upon its maximum watering due to the current irrigation.

3. Irrigation system according to claim 1 or 2, **characterized in that** it further comprises a tap (13) for regulating the air flow-rate and the delivered liquid.

4. Irrigation system according to any one of the previous claims, **characterized in that** the bottom support (5) is made of foamed polystyrene.

## Patentansprüche

1. Beregnungssystem mit automatischer Benetzung der Beregnungsflüssigkeit, das Folgendes enthält:
- einen Behälter (4) insbesondere für Pflanzen oder Blumen, der Behälter ist mit einem durchlochten Boden ausgestattet;
- eine Bodenhalterung (5), auf der der durchlochte Boden des Behälters (4) angebracht ist;
- mindestens einen Schwimmer (3), der mit einem Magneten (2) ausgestattet und in der Halterung (5) untergebracht ist;
- mindestens eine elektromechanische Reed-Vorrichtung (1), die für den Betrieb mit der Halterung (5) verbunden wird und dazu dient, durch mindestens den einen Magneten (2) durch eine Kontaktwirkung der Reed-Lamellen aktiviert zu werden, die durch ein Magnetfeld des Magneten (2) gesteuert werden;
- einen Tank (6), der die Beregnungsflüssigkeit enthält;
- mindestens eine Pumpe (7), die in den Tank (6) eingetaucht wird, die für den Betrieb mit dem Behälter (4) auf einer Seite und mit der elektromechanischen Reed-Vorrichtung (1) auf einer anderen Seite verbunden wird, die Pumpe (7) dient dazu, beim Schließen der Reed-Lamellen mit dem Magneten (2) Beregnungsflüssigkeit vom Tank (6) in den Behälter (4) zu pumpen, wenn keine Beregnungsflüssigkeit in der Halterung existiert (5) und sich der Magnet (2) in Betriebskontakt mit der Reed-Vorrichtung (1) befindet, die Pumpe (7) dient dazu, das Pumpen der Beregnungsflüssigkeit vom Tank (6) in den Behälter (4) bei Öffnung der Reed-Lamellen zu unterbrechen, wenn Beregnungsflüssigkeit in der Halterung (5) existiert, sodass sich der Schwimmer (3) mit seinem Magneten (2) von seinem Betriebskontakt mit der Reed-Vorrichtung (1) entfernt;
- mindestens eine kleine Luftpumpe (11), die dazu dient, Luft in einen unteren Schacht (5a) der Halterung (5) einzuführen sowie das von der Tauchpumpe (7) kommende Wasser mit einem geschlossenen Kreislauf dazu zu zwingen, in eine Wasserleitung (8a) zu fließen, das von der Tauchpumpe (7) kommende Wasser wird somit von der Luft mitgezogen, die von der Luftpumpe (11) kommt, und der Erwerb einer bestimmten kinetischen Energie ermöglicht es, eine Eingabevorrichtung für die Benetzung (14) zu bilden, wenn das Wasser am Auslauf auf eine Oberfläche trifft, auf der es entlangfließt, die Eingabevorrichtung (14) wird durch das Einströmen von Luft in die Flüssigkeitsleitung, die von der Tauchpumpe (7) kommt, aktiviert.

2. Beregnungssystem gemäß Patentanspruch 2, das **dadurch gekennzeichnet ist, dass** die Luftpumpe (11) zwei Wege (11a, 11b), einen Auslaufweg (11a) und einen anderen Weg (11b) hat, um Luft in den Bodenschacht (5a) zu leiten, der einen porösen Stein (12) hat, das Anlagensystem der Wurzel verwendet auf diese Weise ein Luftkissen, wenn es aufgrund der laufenden Beregnung maximal benetzt wird.

3. Beregnungssystem gemäß Patentanspruch 1 oder 2, das **dadurch gekennzeichnet ist, dass** es außerdem einen Hahn (13) enthält, um den Luftdurchfluss und die eingegebene Flüssigkeit zu regulieren.

4. Beregnungssystem gemäß einem beliebigen der vorhergehenden Patentansprüche, das **dadurch gekennzeichnet ist, dass** die Bodenhalterung (5) aus Schaumpolystyrol besteht.

## Revendications

1. Système d'irrigation avec dispositif automatique de pulvérisation du liquide d'irrigation, comprenant :
- un conteneur (4), en particulier pour plantes ou fleurs, doté d'un fond perforé ;
- un support de fond (5) sur lequel se trouve le fond perforé du conteneur (4) ;
- au moins un flotteur (3) doté au moins d'un aimant (2) et placé dans le support (5) ;
- au moins un dispositif électromécanique de type reed (1) relié opérationnellement au support (5) pouvant être actionné au moins par un aimant (2) à travers une action de contact des lamelles reed commandées par un champ magnétique de l'aimant (2) ;
- un réservoir (6) contenant le liquide d'irrigation ;
- au moins une pompe (7) immergée dans le réservoir (6), reliée opérationnellement au conteneur (4) sur un côté et au dispositif électromagnétique de type reed (1) de l'autre côté ; la pompe (7) est apte à pomper le liquide d'irrigation depuis le réservoir (6) vers le conteneur (4) après la fermeture des lamelles reed actionnée par l'aimant (2) quand il n'y a pas de liquide d'irrigation dans le support (5) et que l'aimant (2) se trouve en contact opérationnel avec le dispositif de type reed (1) ; la pompe (7) est apte à interrompre le pompage du liquide d'irrigation depuis le réservoir (6) vers le conteneur (4) après l'ouverture des lamelles reed quand le liquide d'irrigation se trouve dans le support (5) de sorte que le flotteur (3) avec son aimant (2) s'éloignent du contact opérationnel avec le dispositif de type reed (1) ;
- au moins une petite pompe d'air (11) servant aussi bien à faire entrer l'air depuis un puisard inférieur (5a) du support (5) qu'à pousser l'eau provenant de la pompe à immersion (7) dans un tube de passage de l'eau (8a) avec un circuit fermé ; ainsi l'eau provenant de la pompe à immersion (7) est entraînée par l'air provenant de la pompe d'air (11) et l'acquisition d'une énergie cinétique permet de créer un dispositif d'administration (14) du type à pulvérisation quand l'eau, à la sortie, frappe une surface sur laquelle elle glisse ; le dispositif d'administration (14) est activé lors de l'entrée de l'air dans le tube du liquide provenant de la pompe à immersion (7).

2. Système d'irrigation selon la revendication 2, **caractérisé en ce que** la pompe d'air (11) possède deux voies (11a, 11b), une voie de sortie (11a) et une autre voie (11b) pour faire entrer dans le puisard de fond (5a) ayant une pierre poreuse (12), le système d'implantation radical en utilisant ainsi un coussin d'air à son mouillage maximal due à l'irrigation courante.

3. Système d'irrigation selon la revendication 1 ou 2, **caractérisé en ce qu'**il comprend en outre un robinet (13) pour régler le débit de l'air et le liquide administré.

4. Système d'irrigation selon l'une des revendications précédentes, **caractérisé en ce que** le support de fond (5) est en polystyrène expansé.
